## Europäisches Patentamt
## European Patent Office
## Office européen des brevets

(19)

(11) Veröffentlichungsnummer : **0 486 766 B1**

(12)

# EUROPÄISCHE PATENTSCHRIFT

(45) Veröffentlichungstag der Patentschrift :
20.07.94 Patentblatt 94/29

(51) Int. Cl.⁵ : **G01C 19/72**

(21) Anmeldenummer : **91113537.4**

(22) Anmeldetag : **13.08.91**

(54) Faserkreisel vom Sagnac-Typ.

(30) Priorität : **22.11.90 DE 4037118**

(43) Veröffentlichungstag der Anmeldung :
**27.05.92 Patentblatt 92/22**

(45) Bekanntmachung des Hinweises auf die
Patenterteilung :
**20.07.94 Patentblatt 94/29**

(84) Benannte Vertragsstaaten :
**DE FR GB IT**

(56) Entgegenhaltungen :
**EP-A- 0 392 080**
**DE-A- 3 805 905**
**FR-A- 2 633 713**

(73) Patentinhaber : **Deutsche Aerospace AG**
**D-81663 München (DE)**

(72) Erfinder : **Hartl, Engelbert, Dr.**
**Sammtstrasse 3a**
**W-8000 München 80 (DE)**
Erfinder : **Poisel, Hans, Prof. Dr.**
**Bahnhofstrasse 24**
**W-8505 Röthenbach (DE)**
Erfinder : **Trommer, Gert, Dr.**
**Connollystrasse 16**
**W-8000 München 40 (DE)**

EP 0 486 766 B1

## Beschreibung

Die Erfindung bezieht sich auf einen Faserkreisel vom Sagnac-Typ gemäß dem Oberbegriff des Patentanspruchs 1.

Derartige Faserkreisel sind allgemein bekannt. Bei den bekannten Faserkreiseln vom Sagnac-Typ tritt allgemein das Problem auf, daß Änderungen der Eigenschaften der einzelnen Komponenten, aus denen der Faserkreisel besteht, wie beispielsweise der Lichtquelle oder des aus drei optisch gekoppelten Lichtleitern aufgebauten 3x3-Kopplers zu einer Verfälschung des Meßergebnisses führen.

Deshalb ist in der DE 38 05 905 A1 vorgeschlagen worden, mittels eines an der Austrittsseite des Einkoppel-Lichtleiters vorgesehenen Lichtdetektors sowie eines weiteren Monitordetektors, der die Intensität des von der Lichtquelle emittierten Lichts detektiert, Änderungen der Eigenschaften des Faserkreisels zu erfassen und das Meßergebnis entsprechend zu korrigieren. Bei diesem bekannten Faserkreisel können zwar steuerungsbedingte Veränderungen der Lichtquelle sowie verschiedene Veränderungen des 3x3-Kopplers erfaßt und eliminiert werden, dennoch treten weiterhin systematische Meßfehler auf, die, wie erfindungsgemäß erkannt worden ist, von nicht korrigierten Änderungen der Koppelgrößen zwischen den einzelnen Lichtleitern herrühren.

Weiterhin ist in der deutschen Patentanmeldung DE-A-39 12 005 ein Verfahren zur Signalauswertung eines Faserkreisels mit einem 3x3-Koppler beschrieben, bei dem auch bei stochastischen Schwankungen des Kontrastes des auszuwertenden Interferenzsignals eine verbesserte Bestimmung der Drehrate möglich ist.

Dennoch verbleiben auch bei diesem Faserkreisel aufgrund von umweltbedingten Fluktuationen des 3x3-Kopplers Nullpunktdriften und Skalenfaktor-Driften.

Der Erfindung liegt die Aufgabe zugrunde, einen Faserkreisel vom Sagnac-Typ derart weiterzubilden, daß auch der Einfluß von Umweltbedingungen auf den 3x3-Koppler keine Nullpunktdriften und Skalenfaktor-Änderungen bewirkt.

Diese erfindungsgemäß gestellte Aufgabe kann überraschender Weise dadurch gelöst werden, daß von einem Faserkreisel vom Sagnac-Typ gemäß dem Oberbegriff des Patentanspruchs 1, also von einem aus der DE 38 05 905 A1 bekannten Faserkreisel, ausgegangen wird, der dadurch weitergebildet wird, daß die Steuer- und Auswerteeinheit die Intensität und die Schwerpunktwellenlänge des von der Lichtquelle emittierten Lichts derart regelt, daß das Verhältnis des Ausgangssignals des Lichtdetektors, also des an der Austrittsseite des Einkoppel-Lichtleiters vorgesehenen Detektors zum Ausgangssignal des Monitordetektors, also des Detektors, der die Intensität des von der Lichtquelle emittierten Lichts - ohne Zwischenschaltung eines Koppel-Lichtleiters erfaßt -, konstant ist.

Die Erfindung geht dabei von der Grundüberlegung aus, daß die drei Koppelgrößen zwischen den einzelnen Kanälen durch das Produkt der Länge der gemeinsamen Koppelstrecke mit der jeweiligen Koppelkonstante $k_{ij}$ gegeben ist. Die Koppelkonstanten hängen dabei im wesentlichen von den Abständen der jeweiligen Lichtleiter voneinander, von der Wellenlänge des eingekoppelten Lichtes und von den Umweltbedingungen (Druck, Temperatur etc.) ab. Dabei weisen die einzelnen Koppelkonstanten - wie erfindungsgemäß erkannt worden ist - im wesentlichen die gleiche Abhängigkeit von den Umweltbedingungen Druck, Temperatur etc. sowie der Wellenlänge auf. Damit ist es - wie ebenfalls erfindungsgemäß erkannt worden ist - möglich, umweltbedingte Änderungen der Koppelkonstanten durch eine entsprechende Änderung der Schwerpunktwellenlänge des eingekoppelten Lichts dann zu kompensieren, wenn zusätzlich zur Intensität der Lichtquelle die zugehörige Schwerpunktwellenlänge so variiert wird, daß das Verhältnis des Ausgangssignals des Lichtdetektors zum Ausgangssignal des Monitordetektors konstant ist.

Weiterbildungen der Erfindung sind in den abhängigen Ansprüchen angegeben.

Im Hinblick auf die Auswertung der Ausgangssignale der beiden Meßdetektoren, die an den, der Faserspule gegenüberliegenden, Enden der weiteren Lichtleiter angebracht sind, ist es besonders vorteilhaft, wenn die Steuer- und Auswerteeinheit die Intensität und die Schwerpunktwellenlänge des von der Lichtquelle emittierten Lichts derart regelt, daß nicht nur das Verhältnis der beiden Ausgangssignale konstant ist, sondern daß die Ausgangssignale des Lichtdetektors und des Monitordetektors selbst konstant sind; damit ist natürlich auch deren Verhältnis konstant (Anspruch 2).

Die Variation der Schwerpunktwellenlänge der Lichtquelle kann selbstverständlich auf die verschiedensten Arten erfolgen. In den Ansprüchen 3 bis 5 sind besonders vorteilhafte Möglichkeiten gekennzeichnet:

In jedem Falle ist es im Hinblick auf die Baugröße, Unempfindlichkeit etc. von Vorteil, wenn die Lichtquelle eine Halbleiterlichtquelle, wie beispielsweise eine LED, ELED oder ein Halbleiterlaser ist. Bei derartigen Halbleiterlichtquellen kann die Variation des emittierten Lichts entweder durch eine Variation der Temperatur der Halbleiterlichtquelle oder eine Variation des Injektionsstroms (Anspruch 5) erfolgen.

Die Temperatur der Halbleiterlichtquelle kann durch ein Temperierelement, das im Prinzip jede beliebige Heiz- und/oder Kühleinrichtung und insbesondere ein Peltier-Element (Anspruch 4) sein kann, variiert werden.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird, in der zeigen:

Fig. 1 ein erstes Ausführungsbeispiel eines erfindungsgemäßen Faserkreisels, und

Fig. 2 ein zweites Ausführungsbeispiel.

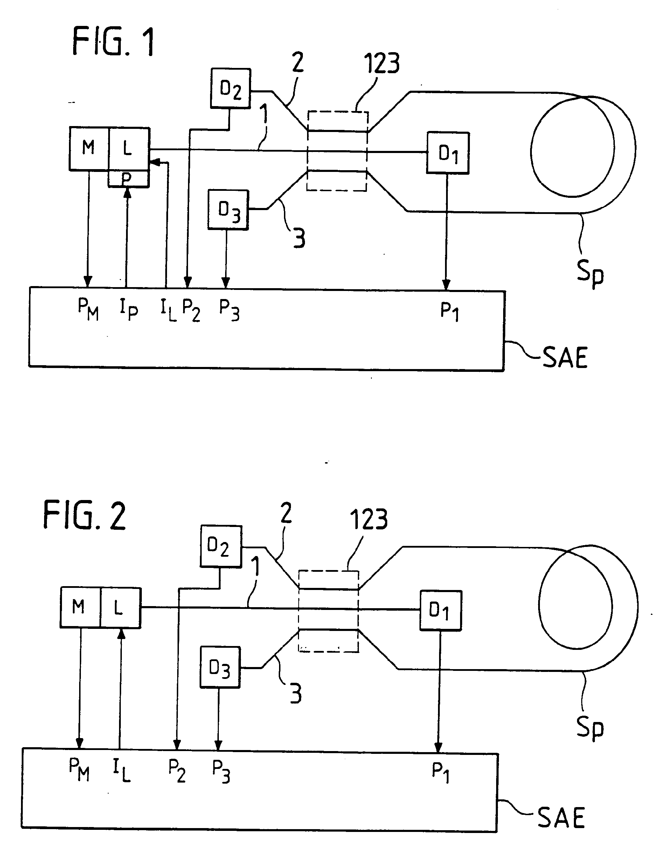

Die in den Figuren 1 und 2 dargestellten Faserkreisel vom Sagnac-Typ haben einen Grundaufbau, wie er in der DE 38 05 905 A1 beschrieben ist:

Selbstverständlich können über die dargestellten Variationen hinaus sämtliche in der genannten Druckschrift beschriebenen Variationen auch für einen erfindungsgemäßen Faserkreisel eingesetzt werden.

Das Licht einer Lichtquelle L wird in einen Einkoppel-Lichtleiter 1 eines 3x3-Kopplers 123 eingekoppelt. Am gegenüberliegenden Ende des Einkoppel-Lichtleiters 1 ist ein Lichtdetektor $D_1$ vorgesehen. Der 3x3-Koppler 123 weist weiter zwei an dem Einkoppel-Lichtleiter 1 angrenzende Lichtleiter 2 und 3 auf, in die Licht der Lichtquelle L zum Einkoppel-Lichtleiter 1 eingekoppelt wird. Die Lichtleiter 2 und 3 sind mit jeweils einem Ende einer Lichtleiterfaserspule Sp verbunden. Am anderen Ende der Lichtleiter 2 und 3 sind Meßdetektoren $D_2$ und $D_3$ vorgesehen. Ferner ist ein Monitordetektor M vorgesehen, der die Intensität des von der Lichtquelle L emittierten Lichts L "direkt" detektiert. Die Ausgangssignale der Detektoren $D_1$ bis $D_3$, $P_1...P_3$ und M ($P_M$) sind an eine Steuer- und Auswerteeinheit SAE angelegt, die aus den einzelnen Ausgangssignalen beispielsweise in der in der DE 38 05 904 A1 beschriebenen Art und Weise die Drehrate bestimmt.

Gemäß der in den Figuren dargestellten Ausführungsbeispielen, ist der Aufbau als bekannt vorauszusetzen.

Erfindungsgemäß ist bei dem in Figur 1 dargestellten Ausführungsbeispiel ein Peltier-Element P vorgesehen, durch das die Temperatur der Lichtquelle, die bei dem gezeigten Ausführungsbeispiel eine Halbleiterlichtquelle, beispielsweise eine LED, eine ELED oder ein Halbleiterlaser ist, verändert werden kann. Bei der Änderung der Temperatur der Lichtquelle wird auch die "Schwerpunktwellenlänge" des von der Lichtquelle emittierten Lichts verschoben. Weiterhin steuert die Steuer- und Auswerteeinheit SAE den Strom $I_L$, mit dem die Lichtquelle beaufschlagt wird.

Bei dem in Figur 2 dargestellten Ausführungsbeispiel wird die Tatsache ausgenutzt, daß die Schwerpunktwellenlänge von Halbleiterlichtquellen neben der Temperatur auch vom Injektionsstrom abhängig ist. Die Steuer- und Auswerteeinheit steuert den Injektionsstrom derart, daß - wie im folgenden beschrieben wird - die Schwerpunktwellenlänge des emittierten Lichts geeignet verschoben wird.

Im folgenden soll die Funktionsweise der in den Figuren 1 und 2 dargestellten Ausführungsbeispiele beschrieben werden:

Die Übertragungseigenschaften eines 3x3-Kopplers, d.h. die Teilungsverhältnisse der Intensität und die relativen Phasenbeziehungen der Lichtwellen an den Ausgangskanälen hängen alleine von den drei Koppelgrößen $K_{12}L$, $K_{13}L$, $K_{23}L$ ab (siehe G. Trommer. Electron.Lett. 25, S.944-945, 1989). Hierbei sind $K_{ij}^o$ die Koppelkonstanten zwischen den drei Kanälen des 3x3-Kopplers, L ist die Länge der gemeinsamen Koppelstrecke. Die $K_{ij}^o$ hängen im wesentlichen ab von den Abständen der jeweiligen Kanäle i, j voneinander und von der Wellenlänge der in den Koppler eingekoppelten Lichtwellen. Die Abhängigkeit der Koppelgrößen $K_{ij}^o$ von Temperatur, Druck, Wellenlänge usw. läßt sich beschreiben durch

$$K_{ij}^{\bullet}(\ ,T,P,\ldots) = K_{ij}^{\bullet}(\lambda,T,P\ldots) \cdot L(T,P,\ldots) \qquad (A)$$

$$= \left| K_{ij}^o \cdot f(T,P,\ldots) \cdot g(\lambda) \right| \cdot L(T,P,\ldots)$$

mit

$$K_{ij}^o = K_{ij}(\lambda_o,T_o,P_o,\ldots) \qquad (2)$$

Hierbei beschreiben $K^o_{ij}$ die Koppelkonstanten für die Kanäle i,j bei einer Referenzwellenlänge $\lambda_o$, Referenztemperatur $T_o$, Referenzdruck $P_o$ usw. Die Umweltabhängigkeit von $K^o_{ij}$ wird durch eine Funktion $f(T,P,\ldots)$ beschrieben, die Wellenlängenabhängigkeit durch $g(\lambda)$, wobei gilt

$f(T_o,P_o\ldots) = 1$, $g(\lambda_o) = 1$

Wesentlich dabei ist, daß alle drei Kanäle i,j näherungsweise die gleiche Abhängigkeit $f(T,P,\ldots)$ bzw. $g(\lambda)$ aufweisen, während sich die mögliche Asymmetrie zwischen den Kanälen lediglich in den Referenzgrößen $K^o_{ij}$ äußert.

3

Erfindungsgemäß ist erkannt worden, daß die Größen $K^o_{ij}$ unabhängig von äußeren Einflüssen, wie Temperatur, Druck etc. konstant gehalten werden können, wenn gilt (unabhängig von den Referenzkoppelkonstanten $K^o_{ij}$)

$$f(T,P,...) \; g(\lambda) \cdot L(T,P,...) \; = \; const \quad (3)$$

Die Information über obige Beziehung gewinnt man aus dem Signal des Meßdetektors $D_1$, der am austrittsseitigen Ende des Einkoppel-Lichtleiters 1 angebracht ist. Es gilt für die gemessene Leistung $P_1$

$$P_1 \; = \; S_1(K_{12},K_{13},K_{23}) \cdot I_o \quad (4)$$

d.h. das Ausgangssignal ist eine Funktion $S_1$ der drei Koppelgrößen $K_{12}$, $K_{13}$, $K_{23}$ und der in den 3x3-Koppler eingekoppelten Lichtintensität I.

Die geforderte Konstanz von Gl(3) ist also dann gegeben, wenn gilt

$$\frac{P_1}{I_o} \; = \; const \quad (5)$$

Dies kann bei Fluktuationen von T,P,... dadurch erreicht werden, indem die Mittenwellenlänge $\lambda$ der Lichtquelle so geregelt wird, daß Gl. (5) erfüllt ist.

Die Lichtquelle L strahlt Licht der Intensität $I_o$ in den Kanal 1 des 3x3-Kopplers. Mit den Ausgangskanälen 2,3 ist die Faserspule als Rotationssensor verbunden. Die Detektoren, beispielsweise Photodioden, $D_1,D_2,D_3$ messen die vom 3x3-Koppler abgegebenen optischen Signale und führen die entsprechenden elektrischen Signale $P_1,P_2,P_3$ einer Steuer- und Auswerteeinheit zu. Die Intensität der Lichtquelle wird mit einer mit der Lichtquelle integrierten Monitordiode M gemessen, deren Signale $P_M$ ebenfalls der Steuer- und Auswerteeinheit zugeführt werden.

Die Steuer- und Auswerteeinheit regelt den Strom $I_L$ der Lichtquelle so, daß $P_M$ konstant bleibt. Weiterhin regelt sie bei dem in Figur 1 dargestellten Ausführungsbeispiel über den Steuerstrom $I_p$ das mit der Lichtquelle L in thermischen Kontakt stehende Peltier-Element P so, daß die damit eingestellte Temperatur die Schwerpunktwellenlänge des emittierten Lichts so einstellt, daß das Signal $P_1$ unabhängig von äußeren Einflüssen konstant bleibt.

Bei dem in Figur 2 dargestellten Ausführungsbeispiel regelt sie den die Lichtquelle L beaufschlagenden Strom $I_L$ derart, daß der Quotient $P_1/P_M$ konstant und gleich einem Referenzwert $(P_1/P_M)_o$ ist, der beispielsweise in einem Speicher der Steuer- und Auswerteeinheit abgelegt ist.

Vorstehend ist die Erfindung anhand von Ausführungsbeispielen beschrieben worden. Selbstverständlich sind die verschiedensten Modifikationen möglich.

## Patentansprüche

1. Faserkreisel vom Sagnac-Typ mit
   - einer Lichtquelle (L),
   - einem aus drei optisch gekoppelten Lichtleitern (1,2,3) aufgebauten 3x3-Koppler (123), der aus einem Einkoppel-Lichtleiter (1), der eintrittsseitig mit der Lichtquelle (L) und austrittsseitig mit einem Lichtdetektor ($D_1$) verbunden ist, und zwei an dem Einkoppel-Lichtleiter (1) angrenzenden Lichtleitern (2,3) besteht, die austrittsseitig mit jeweils einem Ende einer Lichtleiterfaser-Spule (Sp) verbunden sind, und an deren anderen Enden jeweils ein Meßdetektor ($D_2,D_3$) angeordnet ist,
   - einem Monitordetektor (M), der die Intensität des an der Lichtquelle (L) emittierten Lichts erfaßt, und
   - einer Steuer- und Auswerteeinheit (SAE), die aus den Ausgangssignalen der einzelnen Detektoren ($D_1,D_2,D_3$,M) die Drehrate bestimmt,
   dadurch **gekennzeichnet,** daß die Steuer- und Auswerteeinheit die Intensität und die Schwerpunktwellenlänge des von der Lichtquelle (L) emittierten Lichts derart regelt, daß das Verhältnis des Ausgangssignals ($P_1$) des Lichtdetektors ($D_1$) zum Ausgangssignal ($P_M$) des Monitordetektors (M) konstant ist.

2. Faserkreisel nach Anspruch 1,
   dadurch **gekennzeichnet,** daß die Steuer- und Auswerteeinheit Intensität und die Schwerpunktwellenlänge des von der Lichtquelle (L) emittierten Lichts derart regelt, daß die Ausgangssignale ($P_1$,M) des Lichtdetektors ($D_1$) und des Monitordetektors (M) konstant sind.

3. Faserkreisel nach Anspruch 1 oder 2,
   dadurch **gekennzeichnet**, daß die Lichtquelle eine Halbleiterlichtquelle ist und daß ein Temperierelement (P) die Temperatur der Halbleiterlichtquelle zur Variation der Schwerpunktwellenlänge variiert.

4. Faserkreisel nach Anspruch 3,

dadurch **gekennzeichnet**, daß das Temperierelement ein Peltier-Element (P) ist.

5. Faserkreisel nach Anspruch 1,
dadurch **gekennzeichnet**, daß die Lichtquelle eine Halbleiterlichtquelle ist und daß die Steuer- und Auswerteeinheit zur Variation der Schwerpunktwellenlänge des Lichts der Lichtquelle den Injektionsstrom ($I_L$) regelt.

## Claims

1. Sagnac-type fibre gyro, comprising
   - a light source (L),
   - a 3x3-coupler (123) of three optically coupled light conductors (1, 2, 3), composed of a coupling light conductor (1), which is connected at the inlet to the light source (L) and at the outlet to a light detector ($D_1$), and two light conductors (2, 3) adjacent to the coupling light conductor (1), which are connected at the outlet to a respective end of a light conductor fibre coil (Sp), and to the other ends of which is fitted a respective measuring detector ($D_2$, $D_3$);
   - a monitor detector (M) which detects the intenty of light emitted at the light source (L); and
   - a control and evaluation unit (SAE) which sets the rate of rotation by way of the output signals of the individual detectors ($D_1$, $D_2$, $D_3$, M),
   **characterised in that** the control and evaluation unit regulates the intensity and threshold wavelength of light emitted by the light source (L) in such a manner that the ratio of the output signal ($P_1$) of the light detector ($D_1$) and the output signal ($P_M$) of the monitor detector (M) is constant.

2. Fibre gyro according to claim 1, **characterised in that** the control and evaluation unit regulates the intensity and the threshold wavelength of light emitted by the light source (L) in such a manner that the output signals ($P_1$, M) of the light detector ($D_1$) and the monitor detector (M) are constant.

3. Fibre gyro according to claim 1 or 2, **characterised in that** the light source is a semi-conductor light source, and that a tempering element (P) varies the temperature of the semi-conductor light source for variation of the threshold wavelength.

4. Fibre gyro according to claim 3, characterised in that the tempering element is a *Peltier* element (P).

5. Fibre gyro according to claim 1, **characterised in that** the light source is a semi-conductor light source, and that the control and evaluation unit controls the injection current ($I_L$) for variation of the threshold wavelength of the light of the light source.

## Revendications

1. Gyromètre à fibre optique de type Sagnac comportant
   - une source lumineuse (L)
   - un coupleur 3x3 formé de trois fibres optiques (1, 2, 3) couplées optiquement, lequel coupleur se compose d'une fibre optique (1) d'alimentation qui est reliée côté entrée à la source lumineuse (L) et côté sortie à un photo-détecteur ($D_1$) et de deux fibres optiques (2, 3) qui sont accolées à la fibre optique (1) d'alimentation, qui sont reliées côté sortie chacune à une extrémité d'un enroulement de fibre optique (Sp) et à l'autre extrémité desquelles est placé chaque fois un détecteur de mesure ($D_2$, $D_3$),
   - un détecteur de contrôle (M) qui détecte l'intensité de la lumière émise au niveau de la source lumineuse (L) et
   - une unité de commande et de traitement (SAE) qui, à partir des signaux de sortie des différents détecteurs ($D_1$, $D_2$, $D_3$, M), détermine l'amplitude de rotation,
   caractérisé par le fait que l'unité de commande et de traitement règle l'intensité et la longueur d'onde principale de la lumière émise par la source lumineuse (L) de manière telle que le rapport du signal de sortie ($P_1$) du photo-détecteur ($D_1$) au signal de sortie ($P_M$) du détecteur de contrôle (M) soit constant.

2. Gyromètre à fibre optique selon la revendication 1, caractérisé par le fait que l'unité de commande et de traitement règle l'intensité et la longueur d'onde principale de la lumière émise par la source lumineuse (L) de manière telle que les signaux de sortie (P₁, M) du photo-détecteur (D₁, P_M) du détecteur de contrôle (M) soient constants.

3. Gyromètre à fibre optique selon la revendication 1 ou 2, caractérisé par le fait que la source lumineuse (L) est une source lumineuse à semi-conducteur et par le fait qu'un élément d'équilibrage de température (P) fait varier la température de la source de lumière à semi-conducteur aux fins de modifier la longueur d'onde principale.

4. Gyromètre à fibre optique selon la revendication 3, caractérisé par le fait que que l'élément d'équilibrage de température est un élément Peltier (P).

5. Gyromètre à fibre optique selon la revendication 1, caractérisé par le fait que la source lumineuse (L) est une source lumineuse à semi-conducteur et par le fait que l'unité de commande et de traitement règle le courant d'injection ($I_L$) aux fins de faire varier la longueur d'onde principale de la lumière émise par la source lumineuse.

# FIG. 1

# FIG. 2